# FASCICULE DE BREVET EUROPEEN

(11) **EP 3 134 777 B1**
(45) Date de publication et mention de la délivrance du brevet: **28.10.2020**
(21) Numéro de dépôt: 15725745.2
(22) Date de dépôt: 16.04.2015
(51) Int. Cl.: G05B 15/02, F24F 11/00

(54) **PROCÉDÉ DE COMMANDE ET/OU DE CONTRÔLE D'AU MOINS UN ACTIONNEUR**
VERFAHREN ZUR STEUERUNG UND/ODER ÜBERWACHUNG VON MINDESTENS EINEM AKTUATOR
METHOD FOR CONTROLLING AND/OR MONITORING AT LEAST ONE ACTUATOR

(30) Priorité: 25.04.2014 FR 1453729
(43) Date de publication de la demande: 01.03.2017
(73) Titulaire: Somfy Activites SA, 74300 Cluses (FR)
(72) Inventeur: CAVAREC, Pierre Emmanuel, F-74130 Mont Saxonnex (FR); ROUSSEAU, Fabien, F-74440 Mieussy (FR)
(74) Mandataire: Verriest, Philippe
(86) Numéro de dépôt international: PCT/FR2015/051029
(87) Numéro de publication internationale: WO 2015/162359

(56) Documents cités:
- US-A1- 2004 267 385
- US-B1- 6 604 023
- US-B1- 8 086 352

## Description

La présente invention concerne un système et un procédé de commande et/ou de contrôle d'au moins un actionneur.

Il est connu de disposer d'un système de commande d'actionneurs d'un bâtiment comprenant une entité centrale de commande et communiquant avec les actionneurs selon un protocole de communication sans fil connu, notamment un protocole de communication radiofréquence.

US 2004/267385 A1 montre un système d'automatisation du bâtiment dont les appareils électriques peuvent être actionnés par toutes les interfaces utilisateurs.

US 8 086 352 B1 montre un système pour optimiser la consommation énergétique dans; une résidence équipée d'un HVAC.

Les actionneurs comprennent par exemple un moteur électrique agencé pour l'ouverture et la fermeture d'un volet ou d'une fenêtre. Chaque actionneur est également agencé pour fonctionner indépendamment des autres, par exemple lorsqu'il est piloté par une télécommande locale.

On sait également collecter des valeurs de mesures de grandeurs physiques du bâtiment, notamment la température, le degré d'hygrométrie ou la luminosité, l'acoustique. Pour ce faire, on installe un ensemble de capteurs de grandeurs physiques relatives au confort intérieur et à la consommation énergétique dans le bâtiment. Ces capteurs sont placés judicieusement dans le bâtiment pour mesurer de la manière la plus précise possible la grandeur physique considérée. Les capteurs peuvent ensuite piloter localement les actionneurs ou communiquer leurs mesures à l'entité centrale de commande en utilisant le protocole de communication sans fil.

Ce système donne satisfaction en ce que la connaissance précise de valeurs de mesure de grandeurs physiques du bâtiment est permise par les capteurs.

Toutefois, dans un bâtiment, la spécificité de chaque pièce, notamment son utilisation, son orientation, nécessite une multitude de capteurs répartis dans chaque pièce. D'autre part, il est nécessaire que les capteurs soient précis et bien installés dans la pièce (par exemple un capteur de température intérieure, installé sur un mur exposé au soleil dans la journée, ne donnera qu'une mesure imprécise de la température intérieure à la pièce). Ainsi, la mise en place du système peut s'avérer compliquée et couteuse.

La présente invention vise à résoudre tout ou partie des inconvénients mentionnés ci-dessus.

A cet effet, la présente invention concerne un procédé de commande et/ou de contrôle d'au moins un actionneur d'un équipement de confort visuel ou thermique du bâtiment tel que défini dans la revendication 1.

Dans le présent texte, l'expression « point de commande » est équivalente à « unité de commande » : il s'agit d'une entité physique.

Grâce aux dispositions selon l'invention, il devient possible de disposer, facilement et à moindre coût, de mesures de grandeurs physiques relatives au confort ou à la consommation énergétique du bâtiment en une pluralité d'emplacements et de créer un réseau de points de mesures sans ajout de nouveaux éléments, en collectant les données en provenance des points de commande.

En pratique, un capteur est intégré au point de commande. Ainsi, il n'est pas nécessaire de procéder à l'installation d'un parc de capteurs additionnels répartis dans le bâtiment agencé pour la collecte des données.

La collecte de données et son exploitation permet ainsi par exemple de fournir une représentation de valeurs de mesure à un utilisateur ou encore d'obtenir une indication de l'effet d'une commande d'un actionneur sur son environnement immédiat dans le bâtiment, caractérisé par au moins une grandeur physique.

De préférence, la grandeur globale est une grandeur moyenne telle qu'une température moyenne de l'intérieur du bâtiment ou une grandeur totale telle que la puissance acoustique totale dans le bâtiment.

Selon un aspect de l'invention, on détermine à partir des données collectées au moins une grandeur locale relative à une partie du bâtiment, telle qu'une portion d'une pièce, une pièce ou un ensemble de pièces attenantes.

En d'autres termes, l'au moins une grandeur locale est obtenue en réalisant une corrélation de plusieurs données issues de plusieurs points de commande. Par exemple, un de ces points de commande peut avoir un capteur intégré agencé pour réaliser une mesure instantanée d'une température.

Cette disposition permet de prendre en compte toutes les valeurs de mesures instantanées et leurs localisations spatiales associées pour déterminer lors de l'étape d'exploitation des données au moins une grandeur locale présentant une précision supérieure à la précision de chaque mesure instantanée considérée individuellement.

Selon un exemple, on peut déterminer la survenance de la venue de personnes dans une pièce si les capteurs de températures de cette pièce indiquent que la température monte alors que la température reste stable dans les autres pièces du bâtiment.

Selon un aspect de l'invention, on associe une variation d'une valeur de mesure d'une grandeur physique d'un premier type à une variation d'une valeur de mesure d'une grandeur physique d'un second type et on détermine la survenance d'un évènement à partir desdites variations.

A partir de valeurs de mesure telles qu'une température et un degré d'hygrométrie relatifs à une même pièce, il est ainsi possible de déterminer un évènement particulier, comme une séance de repassage dans une chambre ayant pour conséquence une augmentation ponctuelle de la température et une augmentation du degré d'hygrométrie. La détection d'une hausse simultanée de ces deux paramètres, sans impact sur les autres pièces, est caractéristique d'un événement particulier lié à la pièce, à savoir dans l'exemple une séance de repassage.

Dans ce cas, le caractère aberrant de la mesure correspond à un évènement ponctuel ne nécessitant pas de réaction particulière.

Selon un aspect de l'invention, l'exploitation des données comprend une application d'un modèle thermique et/ou aéraulique aux données collectées pour la détermination d'une estimation d'une évolution d'au moins une grandeur physique du bâtiment. De préférence l'application dudit modèle aéraulique permet de déterminer les flux d'air entrant et re-circulant selon une qualité de l'air définie.

Il est ainsi possible de déterminer un ou des ordres de commande d'au moins un équipement de confort visuel ou thermique du bâtiment en fonction des données collectées constituant une cartographie du bâtiment de sorte que l'entité centrale de commande puisse gérer de manière globale le confort et la consommation énergétique.

Chaque actionneur est apte à fonctionner indépendamment car il est commandé par un point de commande associé. Le procédé vise à induire une cohérence entre les valeurs locales et globales ainsi que la cartographie du bâtiment et les états des actionneurs.

Des scenarii de commande peuvent être établis en tenant compte à la fois de mesures locales dans la zone de l'actionneur, dans d'autres zones et/ou de données générales relatives au bâtiment.

Selon un aspect de l'invention, les données collectées comprennent en outre au moins une information relative à un état ou une position d'utilisation d'un actionneur en provenance dudit actionneur.

Cette disposition apporte des informations supplémentaires pour l'exploitation des données collectées. Notamment, outre l'indication de l'influence d'un ordre de commande sur au moins une grandeur physique, il est possible de connaitre l'impact de l'état ou de la position d'utilisation sur au moins une grandeur physique.

Selon un aspect de l'invention, on détermine au moins un groupe correspondant à une localisation logique dans une même portion d'une pièce du bâtiment ou dans un ensemble de pièces attenantes, le groupe comprenant des points de commandes et des actionneurs associés auxdits points de commande.

Selon un aspect de l'invention, la détermination de la grandeur locale est réalisée en prenant en compte les informations relatives aux valeurs de mesures instantanées en provenance du ou des points de commande du groupe.

Selon un aspect de l'invention, on collecte plusieurs mesures instantanées d'une grandeur physique d'un même type simultanément, il est ainsi possible de compenser l'imprécision de certaines mesures grâce aux autres mesures.

Selon un aspect de l'invention, l'exploitation des données comprend également l'identification d'un caractère aberrant d'une valeur mesurée relativement aux autres valeurs mesurées.

La détermination du caractère aberrant permet de ne pas accorder trop d'importance à la valeur mesurée correspondante. De préférence, le caractère aberrant est déterminé par rapport à une moyenne de valeurs mesurées de la grandeur physique de même type en provenance d'autres points de commande et/ou par rapport à une évolution moyenne desdites autres valeurs mesurées de même type.

Lorsqu'il s'agit de valeurs de même type, par exemple de températures, le caractère aberrant d'une valeur mesurée peut résulter d'une mauvaise disposition spatiale du capteur. Selon un exemple il peut s'agir d'un capteur de température exposé au soleil et qui mesure alors une température supérieure à celle de la pièce dans laquelle il est installé.

Selon un aspect de l'invention, le procédé de commande et/ou de contrôle comprend une étape d'identification d'au moins une association d'un actionneur à un point de commande.

L'association existe localement entre le point de commande et l'actionneur (appairage). L'identification de l'association doit être faite par l'entité centrale de commande.

Cette disposition permet à l'entité centrale de commande de localiser le point de commande, et en particulier la provenance de données de mesure de grandeur physique fournies par ce point de commande, en l'associant avec un actionneur donné sans nécessiter de données additionnelles sur la localisation du point de commande dans la mesure où l'actionneur est repéré spatialement.

Cette disposition permet à l'entité centrale de commande d'identifier une association de façon simple, par exemple lorsque le point de commande est une télécommande bidirectionnelle.

Selon un aspect de l'invention, l'identification de l'association d'un actionneur à un point de commande est réalisée en utilisant une information reçue en provenance de l'actionneur relative au point de commande avec qui il est associé, ladite information étant comprise dans les données collectées. Les données sont collectées par l'entité centrale de commande.

Selon un aspect de l'invention, l'identification de l'association d'un actionneur à un point de commande est réalisée en examinant la correspondance d'un ordre de commande émis en provenance dudit point de commande et une réponse d'un actionneur, cohérente avec ledit ordre de commande émis. La réponse consiste en un changement d'état ou de position d'utilisation de l'actionneur.

Cette disposition permet de constater, lorsqu'un ordre de commande à partir d'un point de commande est émis et qu'une position d'utilisation ou un état d'un actionneur se trouve ensuite modifié, que cet actionneur et cet ordre de commande sont associés. L'entité centrale de commande peut ainsi associer un actionneur et un point de commande dans le cas d'un point de commande constitué par exemple par une télécommande unidirectionnelle.

Selon un aspect de l'invention, une commande utilisateur est saisie au niveau d'un point de commande, le point de commande générant un ordre de commande de l'actionneur associé audit point de commande à partir de la commande utilisateur.

Chaque actionneur est apte à être commandé par un utilisateur à partir du point de commande associé indépendamment de l'exécution des étapes du procédé.

Selon un aspect de l'invention, les données collectées comprennent en outre l'ordre de commande.

Non seulement un utilisateur est apte à modifier l'état ou la position d'utilisation d'un actionneur via le point de commande mais cette information est en outre utilisée par le système qui inclut cette information dans les données

Plusieurs architectures sont possibles pour la gestion des données. Selon un aspect de l'invention, l'ordre de commande est émis par le point de commande et est inclus dans les données collectées.

Selon un autre aspect de l'invention, l'entité centrale de commande détermine ensuite un ordre de commande adapté à transmettre à un ou plusieurs actionneurs.

Selon un aspect de l'invention, l'ordre de commande adapté comprend en outre une information relative au caractère prépondérant de l'ordre de commande adapté par rapport à l'ordre de commande émis par le point de commande.

L'adaptation d'un ordre de commande ou un contrordre de commande vise à ce que l'état ou la position de l'actionneur concerné soit cohérent par rapport aux états ou positions d'utilisation des autres actionneurs du bâtiment.

Ainsi des ordres de commande aberrants issus par un point de commande, comme ouvrir une fenêtre et augmenter le chauffage en même temps, peuvent être contrés ou adaptés par le procédé pour le confort de l'utilisateur dans le bâtiment ou l'optimisation de la consommation énergétique du bâtiment.

Il est toujours possible toutefois de définir comme prépondérante la commande utilisateur et ainsi de se passer d'un contrordre. Il s'agit d'une commande forcée d'un actionneur.

Selon un aspect de l'invention, l'entité centrale de commande est apte à déterminer si une modification vis-à-vis d'un ordre de commande issu par un point de commande est nécessaire.

La présente invention concerne également un produit programme d'ordinateur comprenant des portions de code de programme pour l'exécution des étapes du procédé décrit ci-dessus.

La présente invention concerne en outre un système de commande et/ou de contrôle d'au moins un actionneur comprenant :
- une pluralité d'actionneurs, chaque actionneur étant agencé pour piloter un équipement d'un bâtiment, tel qu'un volet, un chauffage, un appareil de climatisation, une lampe ou un haut-parleur,
- une pluralité de point de commande, chaque actionneur étant associé à un point de commande agencé pour d'une part transmettre audit actionneur au moins un ordre de commande, et pour, d'autre part acquérir une valeur de mesure instantanée d'une grandeur physique,
- une entité centrale de commande pourvue d'un processeur agencé pour contenir et exécuter le produit programme d'ordinateur, l'entité centrale de commande étant agencée pour collecter des données selon un protocole de communication sans fil des données en provenance des points de commande et pour exploiter lesdites données.

Selon un aspect de l'invention, l'entité centrale de commande comprend en outre une interface utilisateur agencée pour l'affichage des données collectées. Ainsi l'utilisateur est apte à consulter les valeurs de mesures instantanées en provenance des points de commande du bâtiment.

Selon un aspect de l'invention, au moins un point de commande comprend un capteur, le capteur étant agencé pour mesurer une grandeur physique.

De toute façon l'invention sera bien comprise à l'aide de la description qui suit en référence aux dessins schématiques annexés représentant, à titre d'exemple non limitatif, une forme d'exécution de ce procédé et de ce système.
Figure 1 est un schéma d'un bâtiment comprenant un système de commande et/ou de contrôle d'actionneurs.
Figure 2 est une vue d'un système de commande et/ou de contrôle d'actionneurs.
Figure 3 est un organigramme des étapes d'un procédé de commande et/ou de contrôle d'actionneurs.
Figure 4 est un graphique représentant l'évolution de l'humidité relative et de la température dans les pièces du bâtiment en fonction du temps.

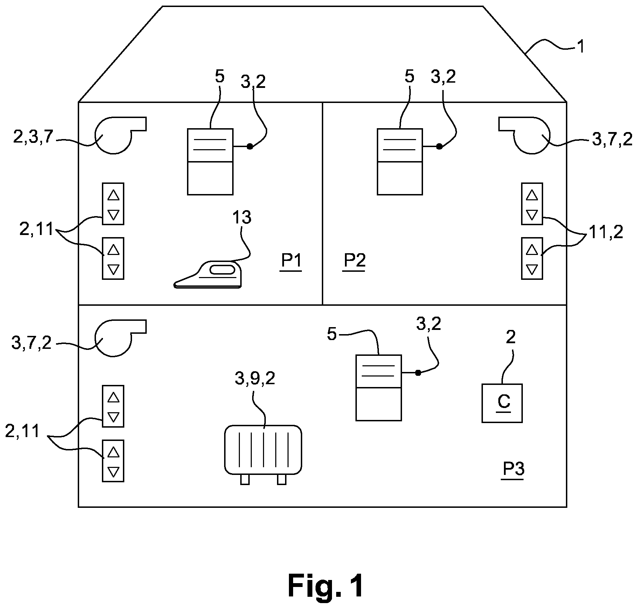

Comme illustré à la figure 1, un bâtiment 1 comprend plusieurs pièces P1, P2, P3 et un système de commande et/ou de contrôle 2 d'une pluralité d'actionneurs 3.

Dans le présent texte, le terme actionneur 3 se réfère à un dispositif permettant d'agir sur un équipement d'un bâtiment, tel qu'un volet, un chauffage, un luminaire, un appareil de climatisation pour modifier son état, de manière électrique et/ou mécanique. L'actionneur comprend un récepteur de commande lui permettant de recevoir un ordre de commande automatique ou manuel, par exemple, issu d'un capteur ou d'une commande utilisateur.

Selon un exemple, un actionneur peut comprendre un moteur électrique agencé pour l'ouverture et la fermeture d'un équipement mobile 5 du bâtiment tel qu'un volet ou une fenêtre, l'ordre de commande correspondant à une position d'utilisation dudit volet ou de ladite fenêtre.

Selon un autre exemple, un actionneur 3 peut comprendre un appareil aéraulique 7.

De manière analogue, un actionneur peut comprendre un moteur électrique, un vérin pneumatique ou hydraulique, une résistance chauffante ou chauffage 9, une lampe ou un électroaimant.

Le système de commande et/ou de contrôle 2 comprend également une pluralité de points de commandes 11. Chaque point de commande 11 est agencé pour émettre à destination d'au moins un actionneur 3 un ordre de commande suite à une action utilisateur sur le point de commande ou suite à la détection d'un passage d'un seuil prédéterminé d'une grandeur physique mesurée par le point de commande.

Un ordre de commande correspond à une consigne de fonctionnement dudit actionneur 3. L'actionneur associé au point de commande d'où provient l'ordre de commande et réceptionnant cet ordre de commande réagit en modifiant son état ou sa position d'utilisation.

Il apparait ainsi qu'un actionneur 3 et un point de commande 11 associés sont aptes à fonctionner indépendamment des autres actionneurs 3 et éventuellement du système de commande et/ou de contrôle 2. Notamment le point de commande 11 peut comprendre une interface utilisateur, ici symbolisée par des triangles, pour qu'un utilisateur puisse saisir ses commandes utilisateurs sur le point de commande 11 afin d'élaborer en conséquence l'ordre de commande.

Dans le mode de réalisation présenté, chaque point de commande 11 comprend au moins un capteur intégré ayant le rôle d'un point de mesure. Le capteur est localisé dans un boitier du point de commande. Selon le type de capteur le boitier peut comprendre une ouverture en regard du capteur pour faciliter la mesure.

Dans le présent texte, le terme capteur se réfère à un dispositif de mesure d'une grandeur physique, par exemple une grandeur relative à un paramètre physique environnant. Le capteur comprend ou coopère avec un émetteur de commande lui permettant de transmettre une valeur exploitable issue de la mesure.

Les grandeurs physiques relatives au confort ou à la consommation énergétique peuvent être à titre d'exemple une grandeur relative à la qualité de l'air (polluant, fumée, taux de CO dans l'air, etc.), à une température intérieure du bâtiment, un degré d'hygrométrie, une grandeur relative à la luminosité, à la répartition spectrale de la lumière, à la présence d'individus dans le bâtiment, une grandeur relative au niveau sonore, à la répartition spectrale du bruit, aux émissions thermiques Infra Rouge, aux vibrations infrasons, à la vitesse des courant d'air (captée par exemple par une sonde à fil chaud).

Les capteurs utilisés dans le mode réalisation présenté sont des capteurs de degrés d'humidité et de températures compris dans les points de commande d'un appareil aéraulique 7 et des capteurs d'un degré de luminosité compris dans les points de commande de volets électriques.

Le capteur 3 d'un point de commande 11 a un premier rôle local : la valeur mesurée est utilisée par le point de commande pour élaborer un ordre de commande à destination de l'actionneur avec qui il est associé. Un ordre de commande peut également provenir de l'interface utilisateur du point de commande. Pour élaborer l'ordre de commande correspondant à la commande utilisateur ou à la mesure du capteur, chaque point de commande comprend un microcontrôleur. Le capteur intégré est également connecté au microcontrôleur. Ainsi, il est possible de mutualiser, entre le capteur et le point de commande, une partie des composants, tels que le microcontrôleur ou un transmetteur radiofréquence.

Le capteur 3 d'un point de commande 11 a un deuxième rôle général : la valeur mesurée est fournie à une entité centrale de commande.

Le système de commande et/ou de contrôle comprend en outre une entité centrale de commande C comprenant un dispositif de traitement pourvu d'un processeur agencé pour commander et/ou contrôler la pluralité d'actionneurs 3 selon un procédé décrit ci-après. L'entité centrale de commande C comprend également une interface utilisateur agencée pour qu'un utilisateur commande et/ou contrôle le système comme expliqué ci-après. L'entité centrale de commande comprend également un dispositif émetteur-récepteur.

L'entité centrale de commande C est agencée pour communiquer avec des actionneurs 3 et des points de commande 11 selon un protocole de communication sans fil habituellement utilisé pour ce type d'appareils, notamment un protocole radiofréquence.

La première étape E1 de commande et/ou de contrôle des actionneurs consiste à collecter des données en provenance des points de commande 11.

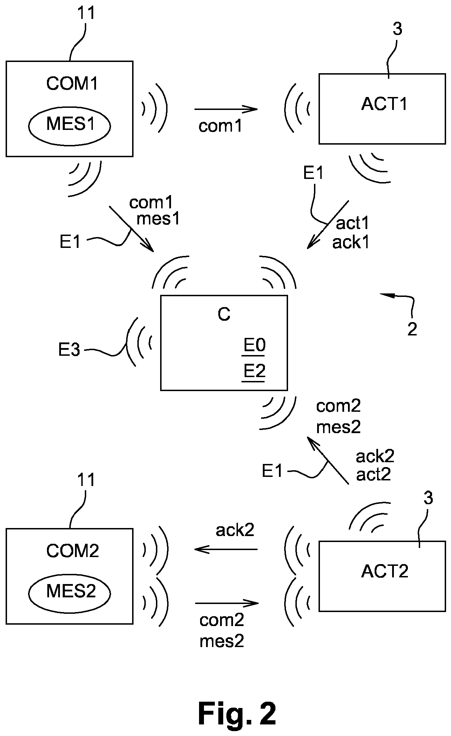

Comme illustré à la figure 2, un actionneur ACT1 est agencé pour recevoir un ordre de commande com1 en provenance d'un point de commande COM1 comprenant un capteur MES1 selon le protocole de communication sans fil symbolisé par une flèche.

Il en est de même pour l'actionneur ACT2 avec l'ordre de commande com2 en provenance du point de commande COM2.

L'entité centrale de commande C est agencé pour stocker une information sur une localisation act1 de l'actionneur ACT1 et sur une localisation act2 de l'actionneur ACT2. Cette information est généralement saisie manuellement par l'utilisateur ou un installateur lors de la configuration du système de commande et/ou de contrôle, à l'installation ou émise par l'actionneur ACT1, respectivement l'actionneur ACT2 selon le protocole de communication sans fil si ces actionneurs disposent de cette information, comme illustré à la figure 2. Cette information n'est pas destinée à être modifiée au cours du temps.

Le capteur MES1 est agencé pour mesurer une valeur instantanée d'une grandeur physique, par exemple une température. Le point de commande COM1 est agencé pour émettre ladite valeur instantanée mes1. Cette valeur peut être émise seule ou dans une trame en accompagnement d'un ordre de commande com1 à destination de l'actionneur ACT1. La valeur instantanée mes1 mesurée par le capteur MES1 est par exemple une humidité relative. Il en va de même respectivement pour le capteur MES2.

L'actionneur ACT2 est également agencé pour recevoir les informations com2 et mes2 en provenance du point de commande COM2. Le point de commande COM2 est bidirectionnel : il est apte en plus, notamment suite à l'envoi d'un ordre de commande com2, de recevoir une confirmation ack2 de réception du message mes2 par l'actionneur ACT2 et/ou de l'exécution de l'ordre de commande par l'actionneur ACT2.

Cette disposition permet au point de commande COM2, lorsqu'il fonctionne indépendamment du système de contrôler ou d'afficher que l'actionneur ACT2 a bien atteint la position de consigne définie par l'ordre de commande com2.

Comme décrit ci-avant et illustré à la figure 2, la première étape E1 comprend pour l'entité centrale de commande C une étape de collecte des informations com1, mes1, com2, mes2, et éventuellement ack1, ack2, en provenance des points de commandes COM1 et COM2 et des actionneurs ACT1, ACT2.

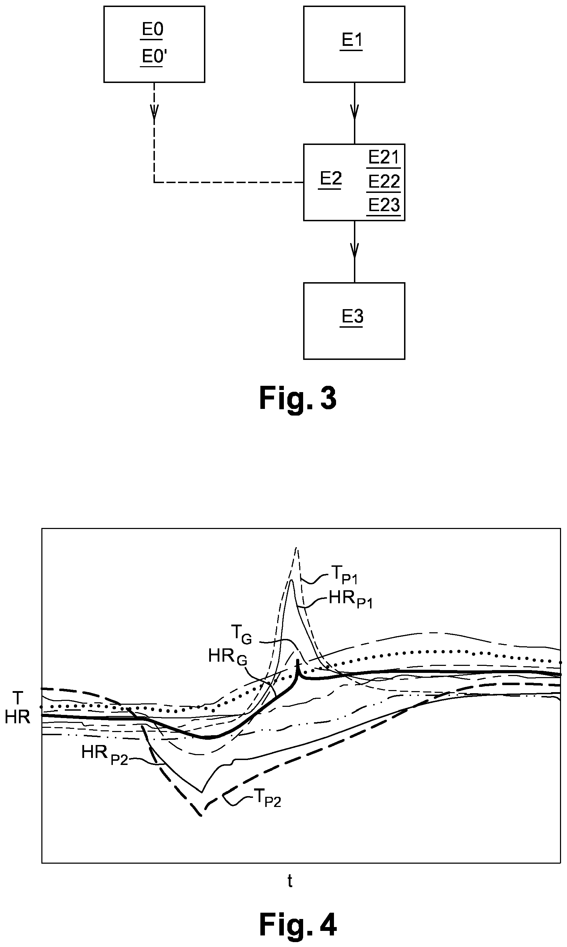

Comme décrit à la figure 3, une étape E0 pouvant être exécutée indépendamment de la première étape E1 consiste à l'association des points de commande aux actionneurs. Cette association, autrement appelée appairage, consiste notamment en l'échange d'au moins un identifiant caractérisant l'actionneur et/ou le point de commande et permettant de créer des liens privilégiés entre points de commande et actionneur. Ainsi, à l'issue de l'appairage, les ordres de commande issus du point de commande COM1 ne seront pris en compte que par l'actionneur ACT1 avec lequel il est appairé.

Cette étape peut n'être réalisée qu'une seule fois, ceci étant symbolisé par les traits en pointillés de la figure 3. Ainsi une fois cette étape E0 réalisée, et qu'aucun nouvel actionneur ou nouveau point de commande n'est ajouté au système de commande et/ou de contrôle, il n'est pas nécessaire de la réaliser à nouveau.

Au cours d'une étape E0', il est ensuite nécessaire à l'entité centrale de commande d'identifier ces appairages ou associations. A cet effet, le processeur de l'entité centrale de commande C est agencé pour enregistrer la correspondance des actionneurs et des points de commandes.

Il existe plusieurs possibilités pour que l'entité centrale de commande puisse réaliser l'identification des associations entre actionneurs et points de commande.

En particulier dans un système de commande et/ou de contrôle où les différents éléments sont bidirectionnels, il est possible pour un utilisateur de procéder manuellement par l'intermédiaire de l'interface utilisateur de l'entité centrale de commande en associant les actionneurs et les points de commandes découverts.

Par découverte, on entend que les points de commandes et les actionneurs échangent des données, notamment des données d'appairage, selon le protocole de communication sans fil avec l'entité centrale de commande C, notamment sur requête de celle-ci.

Dans le cas d'un système où une partie des points de commande est unidirectionnel (par exemple ici le point de commande COM1), le point de commande COM1 n'est pas apte à recevoir un message de confirmation ack1 de l'actionneur ACT1.

Pour identifier l'association entre le point de commande COM1 et l'actionneur ACT1, l'entité centrale de commande est agencée pour reconnaître un ordre de commande issu d'un point de commande et pour reconnaitre une confirmation ack1 d'un actionneur, c'est-à-dire une confirmation de réception d'un ordre de commande ou une confirmation de changement d'état ou de position, successif à un ordre de commande. Le point de commande ayant émis l'ordre de commande est alors considéré comme associé avec l'actionneur ayant confirmé l'ordre.

En l'occurrence, l'entité centrale de commande C est agencée pour constater qu'un changement d'état ou de position dû à un actionneur ACT1 est consécutif à un ordre de commande com1 et pour en déduire que le point de commande COM1 et l'actionneur ACT1 sont associés.

La deuxième étape E2 consiste à exploiter des données collectées pendant la première étape E1, les étapes E0 et E0' étant également réalisées avant cette seconde étape E2, comme illustré à la figure 3.

L'exploitation consiste à réaliser une fusion des données collectées mes1, et mes2, ainsi qu'éventuellement com1 et com2, ack1 et ack2, c'est-à-dire à réaliser une mise en commun au niveau de l'entité centrale de commande C de ces données, comme détaillé ci-après.

L'exploitation des données collectées de façon centralisée permet de fournir un graphe de correspondance ou une cartographie des grandeurs physiques mesurées dans le bâtiment.

Il est ainsi possible de différencier des phénomènes généraux concernant tout le bâtiment 1 d'événements particuliers ne s'appliquant qu'à une partie du bâtiment 1. Cette cartographie permet également de relier des valeurs mesurées à des conditions d'utilisation des pièces du bâtiment.

Avantageusement, la seconde étape E2 peut comprendre une sous-étape E21 de regroupement des actionneurs 3 et des points de commande 11 appartenant à une même partie du bâtiment.

Un groupe d'actionneurs et de points de commande comprend par exemple tous les points de commande avec capteurs et tous les actionneurs compris dans une même pièce : ainsi les grandeurs physiques mesurées dans cette pièce étant liées aux localisations des actionneurs, seront traitées de manière commune pour la commande des actionneurs de la pièce : on peut ainsi déterminer une grandeur locale pour ce groupe d'actionneurs et donc pour cette pièce. Par exemple, si les actionneurs ACT1 et ACT2 sont dans la même pièce, il sera possible d'exploiter la mesure mes1 issue du premier point de commande COM1 pour commander (par l'intermédiaire de l'entité centrale de commande) l'actionneur ACT2, alors même que le point de commande COM1 n'est pas appairé à l'actionneur ACT2.

Selon un autre aspect de l'invention, la seconde étape E2 comprend également une opération de détermination d'un caractère aberrant d'une valeur mesurée relativement aux autres valeurs mesurées.

Ainsi, comme illustré à la figure 4, on a représenté pour le bâtiment 1 l'évolution de la température interne T des pièces et de l'humidité relative HR en fonction du temps t.

On a représenté deux grandeurs globales qui sont la valeur moyenne de la température T_{G} dans le bâtiment 1 et l'humidité relative moyenne HR_{G}. Les grandeurs décrites ci-après sont des grandeurs locales relatives aux pièces P1 et P2 du bâtiment.

Il apparait concernant une pièce P2 en particulier que l'humidité relative HR_{P2} (ainsi que la température interne T_{P2}) diminue ponctuellement pour remonter ensuite. Cette mesure, à priori aberrante car non liée à aucune autre variation dans le bâtiment correspond à un événement particulier : l'ouverture d'une fenêtre. Dans la mesure où cette baisse de température est constatée comme très localisée (les autres mesures disponibles au niveau d'autres localisation dans le bâtiment ne montrant pas cette inflexion), l'entité centrale de commande veillera à éviter une mise en marche du chauffage pour compenser la baisse locale de température.

Dans le même ordre d'idées, on observe, simultanément pour une autre pièce P1 une augmentation de la température interne T_{P1} et une augmentation de l'humidité relative HR_{P1} simultanée. Ceci correspond à un événement particulier : une séance de repassage de linge symbolisée à la figure 1 par un fer à repasser 13.

Il est à remarquer que dans le cas de ces événements, les points de commande de la pièce comprenant le capteur de température interne T_{P1}, respectivement T_{P2} et le capteur du degré d'humidité relative HR_{P1}, respectivement HR_{P2}, appartiennent au même groupe. En effet un événement unique a sur eux deux une influence.

L'événement particulier de la séance de repassage ou de l'ouverture d'une fenêtre a ainsi pu être identifié. Il a une durée plus courte qu'une tendance d'évolution générale d'une grandeur physique liée à un paramètre physique environnant.

Lorsqu'un événement tel qu'une séance de repassage a été identifié une première fois, l'entité centrale de commande est apte à reconnaitre un autre événement du même type.

Une autre opération réalisée lors de la seconde étape consiste à comparer les valeurs de mesure de grandeurs physique de même type, comme la température, pour déterminer si un capteur est précis ou si un capteur mesure une valeur fausse ou imprécise.

Par exemple si un point de commande muni d'un capteur de température est exposé au soleil durablement et donne une valeur visiblement plus élevée que celles des autres points de commande dans la même pièce ou dans d'autres pièces, l'entité centrale de commande est apte à le déterminer.

L'entité centrale de commande est également agencée pour garder en mémoire sur son processeur les valeurs de mesure passées et en déduire des valeurs moyennes et une évolution moyenne attendue. Les valeurs moyennes peuvent correspondre à une valeur moyenne d'une grandeur physique dans le bâtiment considéré dans son ensemble, pour une pièce ou un groupe de capteurs : une grandeur dite globale est ainsi déterminée.

Ainsi, grâce aux dispositions de l'invention, il est possible d'améliorer la fiabilité des valeurs mesurées, de distinguer les tendances générales d'évolution des grandeurs physiques et de reconnaitre des événements ponctuels.

La seconde étape E2 comprend en outre une sous-étape E22 de mise en forme des données pour affichage et communication directe à l'utilisateur des informations déterminées par l'exploitation des données via l'interface utilisateur de l'entité centrale de commande C. Pour ce faire, l'entité centrale de commande C comprend par exemple un écran.

La seconde étape E2 comprend en outre une sous-étape E23 de détermination de scénarii de pilotage des actionneurs 3.

En effet, à partir des données localisées comprises en mémoire, l'entité centrale de commande est apte à déterminer si une modification vis-à-vis d'un ordre de commande locale est nécessaire.

Par exemple, un modèle de calcul mis en œuvre par le processeur peut permettre de déterminer comment réguler le flux d'air de l'appareil aéraulique 7 dans les pièces et même de déterminer comment améliorer la qualité de l'air en agissant sur les ordres de commande aux actionneurs.

Une troisième étape E3, consécutive à la seconde étape E2, consiste à appliquer un scénario de pilotage déterminé lors de la sous-étape E23 de la seconde étape E2.

Par exemple, un utilisateur remarque que la température est élevée dans la pièce après la séance de repassage, comme mentionné plus haut et visible à la figure 4.

Il peut alors émettre un ordre de commande par l'intermédiaire du point de commande du système aéraulique 7 pour que celui-ci alimente la pièce en air frais. Cet ordre de commande peut également avoir lieu de manière automatique, par le biais du capteur de température dans la chambre.

Comme détaillé plus haut cet ordre de commande est capté par l'entité centrale de commande lors de la première étape E1, puis exploité lors de la seconde étape E2.

Le processeur ayant déterminé lors de la seconde étape E2 que l'augmentation de la température est liée à un évènement particulier local, il détermine également que lorsque l'événement cessera, la température reprendra une valeur normale.

L'ordre de commande de l'utilisateur apparait ainsi à l'entité centrale de commande comme peu adapté à la situation. La troisième étape E3 consiste alors à générer un contrordre de commande en transmettant ce contrordre au point de commande concerné ou directement à l'actionneur aéraulique 7 en utilisant le protocole de communication sans fil, comme illustré à la figure 2.

Dans le cas présent, ce contrordre peut être correspondre à une modération de l'arrivée d'air frais. Ainsi, il est possible d'éviter consécutivement à la séance de repassage, une chute de température dans la pièce du fait d'un renouvellement d'air trop important.

Il est également possible, selon un paramétrage de l'entité centrale de commande 3 de ne mettre en œuvre l'application du scénario selon la troisième étape E3 que lorsque l'ordre de commande issu à l'étape E2 est un ordre automatique. Ainsi, un ordre de commande issu d'une action utilisateur reste prioritaire.

Ainsi selon ce paramétrage, l'utilisateur pourra augmenter l'arrivée d'air frais sans que l'entité centrale de commande 3 n'émette de contrordre de commande.

Le procédé présenté apporte ainsi une souplesse d'utilisation. Les points de commande 11 comprenant des capteurs sont utilisés à la fois pour piloter les équipements du bâtiment et réaliser des mesures de grandeurs physiques. La mise en place du système de commande et/ou de contrôle 2 s'avère ainsi simple et peu coûteux. L'intérêt est de créer un réseau de capteurs dans le bâtiment, sans que l'utilisateur ait besoin d'ajouter de nouveaux éléments, puisque les capteurs sont intégrés aux points de commande. En particulier, le procédé selon l'invention est très avantageux pour des chantiers de rénovation, puisqu'il est alors possible d'augmenter les fonctionnalités du système, sans investir dans des capteurs précis et coûteux, et sans surcoût d'installation. D'autre part, l'imprécision des capteurs de mesure intégrés aux points de commande est compensée grâce au maillage des différentes mesures dans le bâtiment. Ainsi le système de commande et/ou de contrôle est fiabilisé.

En effet un capteur intégré a pour premier rôle d'être utilisé localement pour le pilotage indépendant d'un actionneur et pour second rôle de transmettre ses mesures à l'entité centrale de commande.

D'autres capteurs indépendants peuvent également être ajoutés au système s'ils sont aptes à transmettre des données selon le protocole de communication sans fil.

Comme il va de soi, l'invention ne se limite pas à la seule forme d'exécution de ce procédé, décrit ci-dessus à titre d'exemple, elle en embrasse au contraire toutes les variantes de réalisation.

## Revendications

1. Procédé de commande et/ou de contrôle d'au moins un actionneur (3) d'un équipement de confort visuel ou thermique du bâtiment, comprenant les étapes consistant à :
- (E1) collecter des données en provenance d'une pluralité d'unités de commande (11), chacune étant agencée pour émettre au moins un ordre de commande à destination d'au moins un actionneur (3) et chacune comprenant un capteur (3) agencé pour mesurer une valeur instantanée correspondante d'une grandeur physique correspondante relative au confort ou à la consommation énergétique dans un bâtiment (1), les données comprenant au moins pour chaque unité de commande (11) une valeur de mesure instantanée correspondante de la grandeur physique correspondante, la détermination de ladite valeur de mesure correspondante étant réalisée à la localisation de l'unité de commande (11), ladite valeur de mesure étant associée à une localisation spatiale,
- (E2) réaliser une exploitation des données, l'exploitation comprenant la définition d'au moins une correspondance entre une valeur de mesure instantanée d'une grandeur physique provenant d'une unité de commande (11) de la pluralité d'unités de commande (11) et la localisation spatiale de la mesure de ladite grandeur physique dans le bâtiment (1), et, la détermination à partir des données collectées :
d'au moins une grandeur locale (T_{P1}, T_{P2}, HR_{P1}, HR_{P2}) relative à une partie du bâtiment (1), telle qu'une portion d'une pièce, une pièce ou un ensemble de pièces attenantes,
d'au moins une grandeur globale (T_{G}, HR_{G}) du bâtiment (1) relative au confort ou à la consommation énergétique,
une comparaison d'une valeur d'une grandeur locale (T_{P1}, T_{P2}, HR_{P1}, HR_{P2}) relative à ladite partie du bâtiment à une valeur d'une grandeur globale (T_{G}, HR_{G}) du bâtiment (1) étant réalisée,
les valeurs de mesure passées étant gardées en mémoire pour en déduire des valeurs moyennes et une évolution moyenne attendue, les valeurs moyennes pouvant correspondre à une valeur moyenne d'une grandeur globale ou d'une grandeur locale,
- (E3) établir au moins un ordre de commande d'au moins un actionneur (3) de la pluralité d'actionneurs (3) à partir des données collectées.

2. Procédé de commande et/ou de contrôle d'au moins un actionneur (3) selon la revendication 1, dans lequel on associe une variation d'une valeur de mesure d'une grandeur physique d'un premier type à une variation d'une valeur de mesure d'une grandeur physique d'un second type et on détermine la survenance d'un évènement à partir desdites variations.

3. Procédé de commande et/ou de contrôle d'au moins un actionneur (3) selon l'une des revendications précédentes, dans lequel les données collectées comprennent en outre au moins une information relative à un état ou une position d'utilisation d'un actionneur (3) en provenance dudit actionneur (3).

4. Procédé de commande et/ou de contrôle d'au moins un actionneur (3) selon l'une des revendications précédentes, dans lequel on détermine au moins un groupe correspondant à une localisation logique dans une même portion d'une pièce du bâtiment ou dans un ensemble de pièces attenantes, le groupe comprenant des unités de commandes et des actionneurs associés auxdites unités de commande.

5. Procédé de commande et/ou de contrôle d'au moins un actionneur (3) selon la revendication 4, dans lequel la détermination de la grandeur locale est réalisée en prenant en compte les informations relatives aux valeurs de mesures instantanées en provenance de la ou des unités de commande du groupe.

6. Procédé de commande et/ou de contrôle d'au moins un actionneur (3) selon l'une des revendications précédentes, comprenant une étape (E0) d'identification d'au moins une association d'un actionneur (3) à une unité de commande (11).

7. Procédé de commande et/ou de contrôle d'au moins un actionneur (3) selon la revendication 6, dans lequel l'identification de l'association d'un actionneur (3) à une unité de commande (11) est réalisée en utilisant une information reçue en provenance de l'actionneur (3) relative à l'unité de commande (11) avec qui il est associé, ladite information étant comprise dans les données collectées.

8. Procédé de commande et/ou de contrôle d'au moins un actionneur (3) selon la revendication 6, dans lequel l'identification de l'association d'un actionneur (3) à une unité de commande (11) est réalisée en examinant la correspondance d'un ordre de commande émis en provenance de ladite unité de commande (11) et une réponse (ack1, ack2) d'un actionneur (3) cohérente avec ledit ordre de commande émis.

9. Produit programme d'ordinateur comprenant des portions de code de programme pour l'exécution des étapes d'un procédé selon l'une quelconque des revendications précédentes.

10. Système de commande et/ou de contrôle (2) d'au moins un actionneur (3) comprenant :
- une pluralité d'actionneurs (3), chaque actionneur (3) étant agencé pour piloter un équipement d'un bâtiment, tel qu'un volet, un chauffage ou un appareil de climatisation,
- une pluralité d'unités de commande (11), chaque actionneur (3) étant associé à une unité de commande (11) agencée pour d'une part transmettre audit actionneur au moins un ordre de commande, et pour, d'autre part acquérir une valeur de mesure instantanée d'une grandeur physique,
- une entité centrale de commande (C) contenant un produit programme d'ordinateur selon la revendication précédente et pourvue d'un processeur agencé pour exécuter ledit produit programme d'ordinateur, l'entité centrale de commande étant agencée pour collecter des données selon un protocole de communication sans fil en provenance des unités de commande (11) et pour exploiter lesdites données.

11. Système de commande et/ou de contrôle (2) d'au moins un actionneur (3) selon la revendication précédente, dans lequel au moins une unité de commande (11) comprend un capteur, le capteur étant agencé pour mesurer une grandeur physique.

## Patentansprüche

1. Verfahren zur Steuerung und/oder Überwachung von mindestens einem Aktuator (3) einer Ausrüstung für visuellen oder thermischen Komfort des Gebäudes, die folgenden Schritte umfassend:
- (E1) Sammeln von Daten aus einer Vielzahl von Steuereinheiten (11), wobei jede ausgeführt ist, um mindestens einen Steuerbefehl an mindestens einen Aktuator (3) auszugeben, und jede einen Sensor (3) umfasst, der ausgeführt ist, um einen entsprechenden augenblicklichen Wert einer entsprechenden physikalischen Größe in Bezug auf den Komfort oder den Energieverbrauch in einem Gebäude (1) zu messen, wobei die Daten mindestens für jede Steuereinheit (11) einen entsprechenden augenblicklichen Messwert der entsprechenden physikalischen Größe umfassen, wobei das Bestimmen des entsprechenden Messwerts an der Lokalisierung der Steuereinheit (11) realisiert wird, wobei der Messwert einer räumlichen Lokalisierung zugewiesen ist,
- (E2) Realisieren einer Auswertung der Daten, wobei die Auswertung die Definition mindestens einer Entsprechung zwischen einem augenblicklichen Messwert einer physikalischen Größe aus einer Steuereinheit (11) der Vielzahl von Steuereinheiten (11) und der räumlichen Lokalisierung der Messung der physikalischen Größe in dem Gebäude (1) umfasst, und das Bestimmen, aus den gesammelten Daten:
mindestens einer lokalen Größe (T_{P1}, T_{P2}, HR_{P1}, HR_{P2}) in Bezug auf einen Teil des Gebäudes (1), wie einen Abschnitt eines Raumes, einen Raum oder eine Reihe angrenzender Räume,
mindestens einer globalen Größe (T_{G}, HR_{G}) des Gebäudes (1) in Bezug auf den Komfort oder den Energieverbrauch,
wobei ein Vergleich eines Werts einer lokalen Größe (T_{P1}, T_{P2}, HR_{P1}, HR_{P2}) in Bezug auf den Teil des Gebäudes mit einem Wert einer globalen Größe (T_{G}, HR_{G}) des Gebäudes (1) realisiert wird,
wobei die überführten Messwerte im Speicher behalten werden, um daraus Mittelwerte und eine erwartete mittlere Entwicklung abzuleiten, wobei Mittelwerte einem Mittelwert einer globalen Größe oder einer lokalen Größe entsprechen können,
- (E3) Erstellen mindestens eines Steuerbefehls mindestens eines Aktuators (3) der Vielzahl von Aktuatoren (3) aus den gesammelten Daten.

2. Verfahren zur Steuerung und/oder Überwachung von mindestens einem Aktuator (3) nach Anspruch 1, wobei eine Variation eines Messwerts einer physikalischen Größe eines ersten Typs einer Variation eines Messwerts einer physikalischen Größe eines zweiten Typs zugewiesen wird und das Auftreten eines Ereignisses aus den Variationen bestimmt wird.

3. Verfahren zur Steuerung und/oder Überwachung von mindestens einem Aktuator (3) nach einem der vorstehenden Ansprüche, wobei die gesammelten Daten weiter mindestens eine Information in Bezug auf einen Zustand oder eine Nutzungsposition eines Aktuators (3) aus dem Aktuator (3) umfassen.

4. Verfahren zur Steuerung und/oder Überwachung von mindestens einem Aktuator (3) nach einem der vorstehenden Ansprüche, wobei mindestens eine Gruppe bestimmt wird, die einer logischen Lokalisierung in einem selben Abschnitt eines Raumes des Gebäudes oder in einer Reihe von angrenzenden Räumen entspricht, wobei die Gruppe Steuereinheiten und Aktuatoren, die den Steuereinheiten zugewiesen sind, umfasst.

5. Verfahren zur Steuerung und/oder Überwachung von mindestens einem Aktuator (3) nach Anspruch 4, wobei das Bestimmen der lokalen Größe realisiert wird, indem die Informationen in Bezug auf die augenblicklichen Messwerte aus der oder den Steuereinheiten der Gruppe berücksichtigt werden.

6. Verfahren zur Steuerung und/oder Überwachung von mindestens einem Aktuator (3) nach einem der vorstehenden Ansprüche, umfassend einen Schritt (E0) zum Identifizieren mindestens einer Zuweisung eines Aktuators (3) zu einer Steuereinheit (11).

7. Verfahren zur Steuerung und/oder Überwachung von mindestens einem Aktuator (3) nach Anspruch 6, wobei die Identifizierung der Zuweisung eines Aktuators (3) zu einer Steuereinheit (11) realisiert wird, indem eine empfangene Information von dem Aktuator (3) in Bezug auf die Steuereinheit (11), der er zugewiesen ist, genutzt wird, wobei die Information in den gesammelten Daten enthalten ist.

8. Verfahren zur Steuerung und/oder Überwachung von mindestens einem Aktuator (3) nach Anspruch 6, wobei die Identifizierung der Zuweisung eines Aktuators (3) zu einer Steuereinheit (11) realisiert wird, indem die Entsprechung eines Steuerbefehls, der aus der Steuereinheit (11) ausgegeben wird, und eine Antwort (ack1, ack2) eines Aktuators (3), die mit dem ausgegebenen Steuerbefehl in Einklang ist, untersucht werden.

9. Computerprogrammprodukt, Programmcodeabschnitte zur Ausführung der Schritte eines Verfahrens nach einem der vorstehenden Ansprüche umfassend.

10. System zur Steuerung und/oder Überwachung (2) von mindestens einem Aktuator (3), umfassend:
- eine Vielzahl von Aktuatoren (3), wobei jeder Aktuator (3) ausgeführt ist, um eine Ausrüstung eines Gebäudes, wie einen Fensterladen, eine Heizung oder eine Klimaanlage anzusteuern,
- eine Vielzahl von Steuereinheiten (11), wobei jeder Aktuator (3) einer Steuereinheit (11) zugewiesen ist, die ausgeführt ist, um einerseits dem Aktuator mindestens einen Steuerbefehl zu übertragen, und um andererseits einen augenblicklichen Messwert einer physikalischen Größe zu erfassen,
- eine zentrale Steuerstelle (C), die ein Computerprogrammprodukt nach dem vorstehenden Anspruch enthält, und mit einem Prozessor versehen ist, der ausgeführt ist, um das Computerprogrammprodukt auszuführen, wobei die zentrale Steuerstelle ausgeführt ist, um Daten entsprechend einem drahtlosen Kommunikationsprotokoll aus den Steuereinheiten (11) zu sammeln, und um die Daten auszuwerten.

11. System zur Steuerung und/oder Überwachung (2) von mindestens einem Aktuator (3) nach einem der vorstehenden Ansprüche, wobei mindestens eine Steuereinheit (11) einen Sensor umfasst, wobei der Sensor ausgeführt ist, um eine physikalische Größe zu messen.

## Claims

1. A method for controlling and/or monitoring at least one actuator (3) of a visual or thermal comfort equipment of the building, comprising the steps consisting of:
- (E1) collecting data coming from a plurality of control units (11), each being arranged to emit at least one control command for at least one actuator (3) and each comprising a sensor (3) arranged to measure a corresponding instantaneous value of a corresponding physical magnitude related to the comfort or to the energy consumption in a building (1), the data comprising at least for each control unit (11) a corresponding instantaneous measurement value of the corresponding physical magnitude, the determination of said corresponding measurement value being carried out at the location of the control unit (11), said measurement value being associated with a spatial location,
- (E2) carrying out an exploitation of the data, the exploitation comprising the definition of at least one correspondence between an instantaneous measurement value of a physical magnitude coming from a control unit (11) of the plurality of control units (11) and the spatial location of the measurement of said physical magnitude in the building (1), and, the determination from the collected data:
of at least one local magnitude (T_{P1}, T_{P2}, HR_{P1}, HR_{P2}) related to a portion of the building (1), such as a portion of a room, a room or an assembly of adjoining rooms,
at least one overall magnitude (T_{G}, HR_{G}) of the building (1) related to the comfort or to the energy consumption,
a comparison of a value of a local magnitude (T_{P1}, T_{P2}, HR_{P1}, HR_{P2}) related to said portion of the building with a value of an overall magnitude (T_{G}, HR_{c}) of the building (1) being carried out,
the past measurement values being kept in memory to derive mean values and an expected mean evolution, the mean values that can correspond to a mean value of an overall magnitude or of a local magnitude,
- (E3) establishing at least one control command for at least one actuator (3) of the plurality of actuators (3) from the collected data.

2. The method for controlling and/or monitoring at least one actuator (3) according to claim 1, wherein a variation of a measurement value of a physical magnitude of a first type is associated with a variation of a measurement value of a physical magnitude of a second type and the occurrence of an event is determined from said variations.

3. The method for controlling and/or monitoring at least one actuator (3) according to any of the preceding claims, wherein the collected data further comprises at least one information related to a state or a position of use of an actuator (3) coming from said actuator (3).

4. The method for controlling and/or monitoring at least one actuator (3) according to any of the preceding claims, wherein at least one group corresponding to a logical location in the same portion of a room of the building or in an assembly of adjoining rooms is determined, the group comprising control units and actuators associated with said control units.

5. The method for controlling and/or monitoring at least one actuator (3) according to claim 4, wherein the determination of the local magnitude is carried out by taking into account the information related to the instantaneous measurement values coming from the control unit(s) of the group.

6. The method for controlling and/or monitoring at least one actuator (3) according to any of the preceding claims, comprising a step (E0) of identifying at least one association of an actuator (3) with a control unit (11).

7. The method for controlling and/or monitoring at least one actuator (3) according to claim 6, wherein the identification of the association of an actuator (3) with a control unit (11) is carried out using a received information coming from the actuator (3) related to the control unit (11) with which it is associated, said information being comprised in the collected data.

8. The method for controlling and/or monitoring at least one actuator (3) according to claim 6, wherein the identification of the association of an actuator (3) with a control unit (11) is carried out by examining the correspondence of an emitted control command coming from said control unit (11) and a response (ack1, ack2) of an actuator (3) consistent with said emitted control command.

9. A computer program product comprising portions of a program code for executing the steps of a method according to any one of the preceding claims.

10. A system for controlling and/or monitoring (2) at least one actuator (3) comprising:
- a plurality of actuators (3), each actuator (3) being arranged to drive an equipment of a building, such as a shutter, a heater or an air-conditioning unit,
- a plurality of control units (11), each actuator (3) being associated with a control unit (11) arranged, on the one hand, to transmit at least one control command to said actuator and, on the other hand, to acquire an instantaneous measurement value of a physical magnitude,
- a central control unit (C) containing a computer program product according to the preceding claim and provided with a processor arranged to execute said computer program product, the central control unit being arranged to collect data according to a wireless communication protocol coming from the control units (11) and to exploit said data.

11. The system for controlling and/or monitoring (2) at least one actuator (3) according to the preceding claim, wherein at least one control unit (11) comprises a sensor, the sensor being arranged to measure a physical magnitude.
